# EUROPEAN PATENT SPECIFICATION

(11) **EP 1 643 841 B1**
(45) Date of publication and mention of the grant of the patent: **30.11.2011**
(21) Application number: 04801840.2
(22) Date of filing: 29.03.2004
(51) Int. Cl.: A21D 2/26, A21D 13/06

(54) **HIGH-PROTEIN, LOW-CARBOHYDRATE BAKERY PRODUCTS**
PROTEINREICHE KOHLENHYDRATARME BACKWAREN
PRODUITS DE BOULANGERIE A FORTE TENEUR EN PROTEINES ET A FAIBLE TENEUR EN HYDRATES DE CARBONE

(30) Priority: 15.07.2003 US 620019
(43) Date of publication of application: 12.04.2006
(73) Proprietor: MGP Ingredients Inc, Atchison, KS 66002 (US)
(72) Inventor: DOHL, Christopher, T., Netawaka, KS 66516 (US); GAUL, Jennifer, Atchison, Kansas 66002 (US); STEMPIEN, Gregory, Atchison, KS 66002 (US); WOO, Kyungsoo, Shawnee, Kansas 66216 (US); MANINGAT, Clodualdo, Platte City, MO 64079 (US); BASSI, Sukh, Atchison, KS 66002 (US)
(74) Representative: UEXKÜLL & STOLBERG
(86) International application number: PCT/US2004/009889
(87) International publication number: WO 2005/016004

(56) References cited:
- EP-A2- 0 011 174
- US-A- 5 320 859
- US-A- 5 849 090
- US-A1- 2003 134 023
- US-B1- 6 221 418

## Description

### BACKGROUND OF THE INVENTION

### Field of the Invention

The present invention generally pertains to improved bakery products (particularly wheat-containing bakery products and doughs) having higher protein and lower carbohydrate contents when compared with similar, more traditional bakery products and doughs. Products according to the invention comprise a first protein source along with a second proteinaceous ingredient and, optionally, a quantity of resistant starch.

### Description of the Prior Art

The rise in popularity of high-protein diets has increased the demand for high-protein, and consequently, low carbohydrate substitutes for foods, particularly bakery products, which typically contain a significant amount of carbohydrate. Many attempts have been made to decrease the carbohydrate level in these products by substituting a protein source for flour in the product's formulation. While this approach has solved the problem of providing a high-protein, low-carbohydrate product, generally, the resulting product does not have the handling characteristics, loaf volume, crumb grain, texture, or flavor of a traditional bakery product.

For example, if vital wheat gluten is used in large amounts in the production of bread dough, the dough will be too strong or bucky and difficult to handle during mixing, dividing, sheeting, and molding. Also, high levels of protein such as soy protein may adversely affect flavor and give unacceptable volume and crumb grain properties.

Therefore, there exists a real need in the art for a high-protein, low-carbohydrate bakery product which closely resembles a traditional bakery product. The bakery product should exhibit dough handling, machinability, loaf volume, crumb grain, and flavor characteristics similar to those of a traditional bakery product.

US 6 221 418 B1 discloses a dough composition for producing a baked, edible, high protein product having a protein concentration, based on calories, of at least 25%, comprising (a) a mixture of high protein components, (b) flour, (c) leavening agent, (d) sweetener, and (e) water. The mixture of high protein components may comprise material derived from a vegetable or dairy source, edible food fiber derived from a vegetable source and edible emulsifier. These materials comprise soy protein, soy flour, soy isolate, wheat concentrate rice protein, rice concentrate, nuts and soy nuts, and casein, sodium caseinate, calcium caseinate, milk powder, dried egg whites, whey powder and whey isolates.

EP 0 011 174 discloses a mixture suitable for producing high protein enriched backing products which comprise vital wheat gluten, ultra-filtered whey protein concentrate, denaturated soya protein concentrate, wheat bran, salt, dry yeast, and water.

US-A-5 320 859 discloses a high protein dough mix for leavened bakery product consisting of a blend of up to 20 % water, 20 to 80 % of a protein containing material selected form soy products, gluten, milk products, whey products, egg products and nuts, 10 to 80 % of a sweetener, 10 to 20 % of vegetable shortening, up to 50 % flour, and up to 8 % of leavening agent.

### SUMMARY OF THE INVENTION

The present invention overcomes the above problems and provides a high-protein, low-carbohydrate bakery product which exhibits dough handling properties, loaf volume, crumb grain, and flavor characteristics similar to those of a traditional bakery product. As used herein, the term "high-protein, low-carbohydrate bakery product" refers to compositions which contain higher protein and lower carbohydrate amounts relative to more traditional-type products. The term "bakery product" includes, but is not limited to leavened or unleavened, traditionally flour-based products such as white pan and whole wheat breads (including sponge and dough bread), cakes, pretzels, muffins, doughnuts, brownies, cookies, pancakes, biscuits, rolls, crackers, pie crusts, pizza crusts, hamburger buns, pita bread, and tortillas.

In addition to comprising a quantity of flour (particularly wheat flour), the bakery products (including doughs) according to the invention comprise from about 1-150 baker's percent of a first proteinaceous ingredient (preferably from about 5-60 baker's percent) comprising at least about 70% by weight protein and a second proteinaceous ingredient (preferably different from the first ingredient) selected from the group consisting of:
(a) between about 0.5-100 baker's percent of a wheat protein isolate product;
(b) between about 0.5-100 baker's percent of a wheat protein concentrate product;
(c) between about 0.5-100 baker's percent of a devitalized wheat gluten product;
(d) between about 0.5-20 baker's percent of a fractionated wheat protein product;
(e) between about 0.5-20 baker's percent of a deamidated wheat gluten product;
(f) between about 0.5-30 baker's percent of a hydrolyzed wheat protein product; and
(g) any combination of ingredients (a)-(f).

As used herein, the term "baker's percentage" means the weight percent taken on a flour basis, with the weight of flour present in the product being 100%.

Furthermore, all protein weight percentages expressed herein are on aN x 6.25, dry basis, unless otherwise specified.

Wheat protein isolates are generally derived from wheat gluten by taking advantage of gluten's solubility at alkaline or acidic pH values. Wheat gluten is soluble in aqueous solutions with an acidic or alkaline pH and exhibits a classical "U-shaped" solubility, curve with a minimum solubility or isoelectric point at pH 6.5-7.0. By dissolving the gluten, proteins can be separated from non-protein components by processes like filtration, centrifugation, or membrane processing followed by spray drying. Alternatively, wet gluten from wet processing of wheat flour can be repeatedly kneaded, water washed, and dewatered to get rid of contaminating starch and other non-protein components, and subsequently flash dried. These techniques yield a wheat protein isolate product with elevated protein content, at least about 85% by weight, more preferably at least about 90% by weight (on an N x 6.25, dry basis). Wheat protein isolates are less elastic but more extensible than wheat gluten. Examples of preferred wheat protein isolates include Arise™ 3000, Arise™ 5000, and Arise™ 6000 available from MGP Ingredients, Inc., Atchison, Kansas.

Wheat protein concentrates are proteinaceous compositions which preferably have protein contents of at least about 70% by weight, and preferably at least about 82% by weight (N x 6.25, dry basis). Wheat protein concentrates may be of different varieties manufactured by a number of different methods. Vital wheat gluten is one type of wheat protein concentrate that has a protein content of at least about 82% by weight (N x 6.25, dry basis). Vital wheat gluten is a viscoelastic protein manufactured by a flash drying method. Additional types of wheat protein concentrates are manufactured by dispersing wet gluten in an ammonia solution followed by spray drying. These wheat protein concentrates exhibit lesser viscoelastic properties than vital wheat gluten but tend to be more extensible. Examples of the latter type of wheat protein concentrates include FP 300, FP 500, FP 600, and FP 800 available from MGP Ingredients.

Wheat gluten can be devitalized (or rendered non-vital) by the application of moisture, heat, pressure, shear, enzymes, and/or chemicals. Devitalized gluten is characterized by denaturation of proteins where structural changes occur and certain bonds are broken resulting in a product that is non-cohesive and lacks viscoelasticity. Typical processing equipment used to carry out this devitalization include extruders, jet-cookers, and drum-driers. For example, wheat gluten may undergo extrusion processing to produce a texturized product which does not exhibit the same viscoelastic properties of typical wheat gluten. In other words, the devitalized gluten does not form a rubbery and/or extensible dough when hydrated. Devitalized wheat gluten preferably comprises at least about 60% by weight protein, and more preferably at least about 70% by weight (N x 6.25, dry basis). Examples of devitalized wheat gluten for use with the present invention are Wheatex™ 16, Wheatex™ 120, Wheatex™ 240, Wheatex™ 751, Wheatex™ 1501, Wheatex™ 2120, Wheatex™ 2240, Wheatex™ 2400, Wheatex™ 3000, Wheatex™ 6000, and Wheatex™ 6500 available from MGP Ingredients.

Wheat gluten is a binary mixture of gliadin and glutenin. These components can be separated by alcohol fractionation or by using a non-alcoholic process (as disclosed in U.S. Patent No. 5,610,277) employing the use of organic acids. Gliadin is soluble in 60-70% alcohol and comprises monomeric proteins with molecular weights ranging from 30,000 to 50,000 daltons. These proteins are classified as alpha-, beta-, gamma-, and omega-gliadins depending on their mobility during electrophoresis at low pH. Gliadin is primarily responsible for the extensible properties of wheat gluten. Glutenin is the alcohol insoluble fraction and contributes primarily to the elastic or rubbery properties of wheat gluten. Glutenin is a polymeric protein stabilized with inter-chain disulfide bonds and made up of high-molecular weight and low molecular weight subunits. Generally, glutenin exhibits a molecular weight exceeding one million daltons. Preferred fractionated wheat protein products comprise at least about 85% by weight protein, and more preferably at least about 90% by weight for gliadin and about 75% by weight protein, and more preferably at least about 80% by weight for glutenin, all proteins expressed on N x 6.25, dry basis.

Deamidated wheat protein products may be manufactured according to a number of techniques. One such technique is to treat wheat gluten with low concentrations of hydrochloric acid at elevated temperatures to deamidate or convert glutamine and asparagine amino acid residues in the protein into glutamic and aspartic acid, respectively. Other techniques include treating wheat gluten with an alkaline solution or with enzymes such as transglutaminase. This modification causes a shift in the isoelectric point of the protein from about neutral pH to about pH 4. This signifies that the deamidated wheat protein product is least soluble at pH 4, but is soluble at neutral pH. Deamidated wheat protein products preferably comprise at least about 75% by weight protein, and more preferably at least about 83% by weight (N x 6.25, dry basis). An example of a deamidated wheat protein product for use with the present invention is WPI 2100 available from MGP Ingredients.

Hydrolyzed wheat protein products are manufactured by reacting an aqueous dispersion of wheat gluten with food-grade proteases having endo- and/or exo-activities to hydrolyze the proteins into a mixture of low-molecular weight peptides and polypeptides. The hydrolyzed mixture is then dried. Hydrolyzed wheat protein products generally exhibit a water solubility of at least about 50%. Hydrolyzed wheat protein products preferably have protein contents of at least about 70% by weight, more preferably at least about 82% by weight (on an 6.25 x N, dry basis). Examples of hydrolyzed wheat protein products for use in the present invention include HWG 2009, FP 1000, and FP 1000 Isolate, all available from MGP Ingredients.

The high-protein bakery products according to the invention comprise from about 1-150 baker's percent of the first proteinaceous ingredient, preferably from about 5-60 baker's percent. The first proteinaceous ingredients comprise at least about 70% by weight protein and preferably at least 82% by weight protein (6.25 x N, dry basis). Exemplary preferred first proteinaceous ingredients include vital wheat gluten, soy protein concentrate, soy protein isolate, whey protein, sodium caseinate, nonfat dry milk, dried egg whites, wheat protein isolate, wheat protein concentrate, devitalized wheat gluten, fractionated wheat protein, deamidated wheat gluten, hydrolyzed wheat protein, and mixtures thereof.

Bakery products according to the present invention may be chemically leavened or yeast leavened. Preferred chemical leavening agents include sodium bicarbonate, monocalcium phosphate, sodium aluminum phosphate, sodium aluminum sulfate, sodium acid pyrophosphate, dicalcium phosphate, potassium acid tartrate, and glucono-delta-lactone.

Preferred yeast-leavened bakery products and dough have a total protein content from about 5-35% by weight, and more preferably from about 20-28% by weight. Preferred chemically leavened bakery products and dough have a total protein content from about 4-18% by weight, more preferably from about 6-12% by weight

Preferably, bakery products made in accordance with the present invention comprise an amount of resistant starch. The resistant starch may be used in place of at least a portion of the flour which comprises traditional bakery products, thereby effectively reducing the "net" carbohydrate total of the bakery product As explained in further detail below, resistant starch is generally not digestible thereby exhibiting characteristics which are similar to those of dietary fiber.

In 1987 Englyst and Cummings at the MRC Dunn Clinical Nutrition Center in Cambridge, UK, proposed a classification of starch based on its likely digestive properties in vivo. They also devised in vitro assay methods to mimic the various digestive properties of starch. Three classes of dietary starch were proposed:
(1) Rapidly Digestible Starch (RDS). RDS is likely to be rapidly digested in the human small intestine; examples include freshly cooked rice and potato, and some instant breakfast cereals.
(2) Slowly Digestible Starch (SDS). SDS is likely to be slowly yet completely digested in the small intestine; examples include raw cereal starch and cooked pasta.
(3) Resistant Starch (RS). RS is likely to resist digestion in the small intestine. RS is thus defined as the sum of starch and starch degradation products not likely to be absorbed in the small intestine of healthy individuals. RS can be subdivided into four categories depending on the cause of resistance (Englyst et al., Eur. J. Clin. Nutr. 46(suppl 2):S33,1992; Eerlingen et al., Cereal Chem. 70:339, 1993).

RS₁. Physically inaccessible starch due to entrapment of granules within a protein matrix or within a plant cell wall, such as in partially milled grain or legumes after cooling.

RS₂. Raw starch granules, such as those from potato or green banana, that resist digestion by alpha-amylase, possibly because those granules lack micropores through their surface.

RS₃. Retrograded amylose formed by heat/moisture treatment of starch or starch foods, such as occurs in cooked/cooled potato and corn flake.

RS₄. Chemically modified starches, such as acetylated, hydroxypropylated, or cross-linked starches that resist digestion by alpha-amylase. Those modified starches would be detected by the in vitro assay of RS. However, some RS₄ may not be fermented in the colon.

RS₁, RS₂, RS₃ are physically modified forms of starch and become accessible to alpha-amylase digestion upon solubilization in sodium hydroxide or dimethyl sulfoxide. RS₄ that is chemically substituted remains resistant to alpha-amylase digestion even if dissolved. RS₄ produced by cross-linking would resist dissolution.

Highly cross-linked wheat starches belonging to RS₄ category may be manufactured by processes disclosed in U.S. Patent No. 5,855,946 and U.S. Patent No. 6,299,907. Typical total dietary fiber content (AOAC Method 991.43) of these RS₄ products can range from 10% to greater than 70%. Examples of preferred RS₄ products for use with the present invention are the FiberStar series, for example FiberStar 70, available from MGP Ingredients.

Preferred products according to the present invention comprise from about 5-120 baker's percent of a resistant starch, and more preferably from about 20-90 baker's percent.

Table 1 summarizes broad and preferred ranges of the various second proteinaceous ingredients for use in products according to the present invention. The various weight percentages listed are on a flour weight basis (or baker's percent).

**Table 1**

| Second proteinaceous ingredient | Broad range | Preferred range |
|---|---|---|
| Wheat protein isolate product | 0.5-100% | 5-50% |
| Wheat protein concentrate product | 0.5-100% | 5-50% |
| Devitalized wheat gluten product | 0.5-100% | 5-25% |
| Fractionated wheat protein product | 0.5-20% | 0.5-5% |
| Deamidated wheat gluten product | 0.5-20% | 0.5-5% |
| Hydrolyzed wheat protein product | 0.5-30% | 0.5-5% |

Preferred products made in accordance with the invention exhibit several nutritional and functional benefits. The products are a good source of nutrition due to their elevated protein content and because of a reduced total caloric contribution from carbohydrates. The various protein sources provide a good complement of amino acids. In addition to being an excellent source of fiber (attributable to the presence of resistant starch), the products exhibit a low glycemic index. As stated previously, the inventive formulation improves dough handling and machinability, decreases dough buckiness, and improves product flavor.

### DETAILED DESCRIPTION OF THE PREFERRED EMBODIMENT

The following examples set forth preferred products in accordance with the present invention. It is to be understood, however, that these examples are provided by way of illustration and nothing therein should be taken as a limitation upon the overall scope of the invention.

For Examples 1-11, the following mixing and baking procedures were used. All dry ingredients were blended together until thoroughly incorporated. All liquid ingredients were added and the dough mixed for one minute on low speed using a Hobart A200 mixer (Hobart Corp.) With a spiral dough hook, and then mixed for 2-2.5 minutes on high speed. The mixing was relatively minimal to prevent excessive development and excessively tough and rubbery bread. The dough scaling weight followed a pan factor of 2.00-2.05. The dough scaling weight (in ounces) was determined by dividing the area (in square inches) of the top of the bread pan by the pan factor. The dough was proofed at 43.3°C (110°F) with a relative humidity of 85%. The dough was baked at 199°C (390°F) for 37-42 minutes.

### Example 1

### High-Protein, Low-Carbohydrate Bread

| Ingredients | Weight % (Flour Weight Basis) |
|---|---|
| Vital Wheat Gluten | 111.1 |
| Bread Flour | 100.0 |
| Wheat Protein Isolate¹ | 27.8 |
| Hydrolyzed Wheat Protein² | 16.7 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Water | 264.0 |

| | |
|---|---|
| ¹ARISE™ 5000 available from MGP Ingredients. ² HWG 2009 available from MGP Ingredients. | |

### Example 2

### High-Protein, Low-Carbohydrate Bread

| Ingredients | Weight % (Flour Weight Basis) |
|---|---|
| Vital Wheat Gluten | 111.1 |
| Bread Flour | 100.0 |
| Wheat Protein Isolate¹ | 44.5 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Water | 264.0 |

| | |
|---|---|
| ¹ARISE™ 5000 available from MGP Ingredients. | |

### Example 3

### High-Protein, Low-Carbohydrate Bread

| Ingredients | Weight % (Flour Weight Basis) |
|---|---|
| Vital Wheat Gluten | 111.1 |
| Bread Flour | 100.0 |
| Wheat Protein Isolate¹ | 44.5 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Fungal Protease | 0.03 |
| Water | 264.0 |

### Example 4

### High-Protein, Low-Carbohydrate Bread

| Ingredients | Weight % (Flour Weight Basis) |
|---|---|
| Vital Wheat Gluten | 111.1 |
| Bread Flour | 100.0 |
| Soy Protein Isolate | 44.5 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Fungal Protease | 0.03 |
| Water | 264.0 |

| | |
|---|---|
| ¹ARISE™ 5000 available from MGP Ingredients. | |

### Example 5

### High-Protein, Low-Carbohydrate Bread

| Ingredients | Weight % (Flour Weight Basis) |
|---|---|
| Vital Wheat Gluten | 111.1 |
| Bread Flour | 100.0 |
| Wheat Protein Concentrate¹ | 44.5 |
| Yeast | 10.0 |
| Whey Protein | 16.7 |
| Flavor (Butter, Masking) | 1.1 |
| Salt | 5.0 |
| Sucralose (Artificial Sweetener) | 0.1 |
| Water | 264.0 |

| | |
|---|---|
| ¹ FP 500 available from MGP Ingredients. | |

### Example 6

### High-Protein, Low-Carbohydrate Bread

| Ingredients | Weight % (Flour Weight Basis) |
|---|---|
| Vital Wheat Gluten | 111.1 |
| Bread Flour | 100.0 |
| Wheat Protein Concentrate¹ | 44.5 |
| Yeast | 10.0 |
| Whey Protein | 16.7 |
| Flavor (Butter, Masking) | 1.1 |
| Salt | 5.0 |
| Sucralose (Artificial Sweetener) | 0.1 |
| Devitalized Wheat Gluten² | 20.8 |
| Water | 285.0 |

| | |
|---|---|
| ¹ FP 500 available from MGP Ingredients. ² Wheatex™ 16 available from MGP Ingredients. | |

### Example 7

### High-Protein, Low-Carbohydrate Whole Wheat Bread

| Ingredients | Weight % (Flour Weight Basis) |
|---|---|
| Whole Wheat Flour | 100.0 |
| Vital Wheat Gluten | 62.5 |
| Wheat Protein Isolate¹ | 50.0 |
| Compressed Yeast | 8.8 |
| Shortening | 8.8 |
| Salt | 2.5 |
| Sucralose (Artificial Sweetener) | 0.1 |
| Water | 190.0 |

| | |
|---|---|
| ¹ Arise™ 6000 available from MGP Ingredients. | |

### Example 8

### High-Protein, Low-Carbohydrate Whole Wheat Bread

| Ingredients | Weight % (Flour Weight Basis) |
|---|---|
| Whole White Wheat Flour | 100.0 |
| Vital Wheat Gluten | 62.5 |
| Wheat Protein Isolate¹ | 50.0 |
| Compressed Yeast | 8.8 |
| Shortening | 8.8 |
| Salt | 2.5 |
| Sucralose (Artificial Sweetener) | 0.1 |
| Water | 190.0 |

| | |
|---|---|
| ¹ Arise™ 6000 available from MGP Ingredients. | |

### Example 9

### High-Protein, Low-Carbohydrate White Pan Bread

| Ingredients | Weight % (Flour Weight Basis) |
|---|---|
| Whole White Wheat Flour | 100.0 |
| Vital Wheat Gluten | 62.5 |
| Wheat Protein Isolate¹ | 50.0 |
| Compressed Yeast | 8.8 |
| Shortening | 8.8 |
| Salt | 2.5 |
| Sucralose (Artificial Sweetener) | 0.1 |
| Water | 170.0 |

| | |
|---|---|
| ¹ Arise™ 6000 available from MGP Ingredients. | |

### Example 10

### High-Protein, Low-Carbohydrate White Pan Bread

| Ingredients | Weight % (Flour Weight Basis) |
|---|---|
| Bread Flour | 100.0 |
| Vital Wheat Gluten | 62.5 |
| Wheat Protein Isolate¹ | 50.0 |
| Resistant Starch² | 12.5 |
| Compressed Yeast | 8.8 |
| Shortening | 8.8 |
| Salt | 2.5 |
| Sucralose (Artificial Sweetener) | 0.1 |
| Water | 170.0 |

| | |
|---|---|
| ¹ Arise™ 6000 available from MGP Ingredients. ² FiberStar 70 available from MGP Ingredients. | |

### Example 11

### High-Protein, Low-Carbohydrate White Pan Bread

| Ingredients | Weight % (Flour Weight Basis) |
|---|---|
| Bread Flour | 100.0 |
| Vital Wheat Gluten | 62.5 |
| Wheat Protein Isolate¹ | 50.0 |
| Resistant Starch² | 12.5 |
| Devitalized Wheat Gluten³ | 5.0 |
| Compressed Yeast | 8.8 |
| Shortening | 8.8 |
| Salt | 2.5 |
| Sucralose (Artificial Sweetener) | 0.1 |
| Water | 170.0 |

| | |
|---|---|
| ¹ Arise™ 6000 available from MGP Ingredients. ² FiberStar 70 available from MGP Ingredients. ³ Wheatex 16 available from MGP Ingredients. | |

### Example 12

### High-Protein, Low-Carbohydrate Whole Wheat Bread

| Ingredients | Weight % (Flour Weight Basis) |
|---|---|
| Whole Wheat Flour | 100.0 |
| Vital Wheat Gluten | 25.7 |
| Wheat Protein Isolate¹ | 17.1 |
| Hydrolyzed Wheat Protein² | 1.4 |
| Resistant Starch³ | 21.4 |
| Compressed Yeast | 9.3 |
| Salt | 2.9 |
| Water | 107 |
| Vegetable Oil | 10.7 |
| Sucralose (Artificial Sweetener) | 0.03 |
| Calcium Propionate | 0.65 |
| Diacetyl Tartaric Acid Esters of Mono- and Diglycerides | 0.60 |
| Sodium Stearoyl Lactylate | 0.60 |
| Azodicarbonamide | 0.006 |
| Asorbic Acid | 0.02 |
| Natural Butter Flavor | 0.36 |

| | |
|---|---|
| ¹ Arise ™ 6000 available from MGP Ingredients. ² HWG 2009 available from MGP Ingredients. ³ FiberStar 70 available from MGP Ingredients. | |

In this Example 12, all dry ingredients were blended together until completely uniform. Liquid ingredients were added next and mixed for 1 minute on low and 5.5 minutes on high speed using Hobart mixer (Hobart Corp.) equipped with a spiral dough hook. Dough scaling weight followed a pan factor of 2.05. The dough weight was determined by dividing the area (in square inches) of the top of the bread pan by 2.05. The dough was proofed at 43.3°C (110°F) and 85% relative humidity, and then baked at 204°C (400°F) for 25 minutes.

### Example 13

### High-Protein, Low-Carbohydrate Bagel

| Ingredients | Weight % (Flour Weight Basis) |
|---|---|
| Vital Wheat Gluten | 111.1 |
| Bread Flour | 100.0 |
| Wheat Protein Concentrate¹ | 50.0 |
| Yeast | 10.0 |
| Whey Protein | 16.7 |
| Flavor (Butter, Masking) | 1.10 |
| Salt | 6.0 |
| Sucralose (Artificial Sweetener) | 0.1 |
| L-Cysteine | 0.005 |
| Water | 267.0 |

| | |
|---|---|
| ¹ FP 500 available from MGP Ingredients. | |

In this Example 13, all dry ingredients were blended together until completely homogeneous. Water was added to blended ingredients and mixed to optimum development using a Hobart mixer (Hobart Corp.). About 4.3 ounces of bagel dough was weighed, proofed briefly, and baked in an oven (with steam) at 199°C (390°F) for 17-22 minutes.

### Example 14

### French Cruller Doughnut

| Ingredient | Weight % (based on total weight) |
|---|---|
| Vital Wheat Gluten | 1.13 |
| Deamidated Wheat Gluten¹ | 1.00 |
| Resistant Starch² | 7.00 |
| Water | 43.00 |
| Whole eggs | 25.40 |
| Pregel 10FC | 14.60 |
| Carboxymethyl cellulose | 0.08 |
| Sodium caseinate | 0.62 |
| All purpose shortening | 5.80 |
| 65 A type emulsifier | 0.85 |
| Baking soda | 0.06 |
| Sodium acid pyrophosphate 40 | 0.02 |
| Monocalcium phosphate (particle size 12 XX) | 0.08 |
| Flavor | 0.03 |
| Color (beta-carotene) | 0.03 |
| Salt | 0.30 |

| | |
|---|---|
| ¹ WPI 2100 available from MGP Ingredients. ² FiberStar 70 available from MGP Ingredients. | |

This French Cruller doughnut is an example of a chemically leavened, fried product according to the invention. All ingredients (except the water and eggs) were mixed until uniform. Hot water at 51.7-54.4°C (125-130°F) was added and the batter mixed on low speed for 30 seconds. The mixer speed was increased to medium and the batter mixed an additional two minutes, at which time the eggs were added and the batter mixed on low speed for one minute. The batter was mixed an additional three minutes on medium speed. The temperature of the batter was between 29.4-32.2°C (85-90°F). The doughnuts were fried for 2 3/4 minutes on the first side, then turned and fried for three minutes on the second side, and finally turned again and fried for 15 seconds.

### Example 15

### Chocolate Cake Doughnut

| Ingredient | Weight % (Flour Weight Basis) |
|---|---|
| Flour | 100.0 |
| Sugar (ultrafine pure cane) | 99.3 |
| Crystalline fructose | 17.1 |
| Dextrose 333 | 1.3 |
| Defatted soy flour | 8.6 |
| Corn flour | 6.4 |
| Wheat Protein Isolate¹ | 11.8 |
| Vital Wheat Gluten | 10.0 |
| Resistant Starch² | 90.0 |
| Dried egg yolk | 8.6 |
| Salt | 3.9 |
| Pregel 46 | 2.1 |
| Pregel 10 | 2.1 |
| Powdered lecithin | 1.1 |
| Sodium bicarbonate | 3.2 |
| Sodium acid pyrophosphate #28 | 1.7 |
| Sodium acid pyrophosphate #37 | 3.9 |
| Carboxymethyl cellulose | 0.2 |
| Sodium propionate | 2.1 |
| Dutched cocoa | 33.6 |
| Vegetable oil | 18.8 |
| Emulsifier | 1.2 |
| Pure vanilla extract | 1.5 |

| | |
|---|---|
| ¹ Arise™ 5000 available from MGP Ingredients. ² FiberStar 70 available from MGP Ingredients. | |

In the chocolate cake donut formula (a chemically-leavened, fried product according to the invention), the emulsifier and sugar were creamed together. All dry ingredients were then incorporated to the creamed sugar mixture for 10 minutes at speed 2 in a Kitchen Aid mixer (Hobart Corp.) equipped with a paddle. Water at 27.2°C (81°F) was added and mixed for one minute at speed 1 and at speed 2 for one minute and 35 seconds. The quantity of water ranged from 46-48% of the dry mix weight. The batter temperature was between 24.4-25.5°C (76-78°F). The batter was rested for 6 minutes at room temperature, and then fried for one minute each side.

### Example 16

### Blueberry Muffin Mix

| Ingredient | Weight % (Flour Weight Basis) |
|---|---|
| Flour | 100.0 |
| Vital Wheat Gluten | 5.0 |
| Fractionated Wheat Protein¹ | 5.0 |
| Resistant Starch² | 90.0 |
| Sucrose | 160.0 |
| Nonfat dry milk | 20.0 |
| All purpose shortening | 57.4 |
| Emulsified shortening | 17.0 |
| Salt | 3.8 |
| Baking powder | 10.0 |
| Pregel 40 | 8.0 |
| Flavor | 2.0 |
| Xantham gum | 0.4 |
| Guar gum | 0.4 |
| Sodium stearoyl lactylate | 0.5 |
| Blueberries | 60.0 |
| Whole eggs | 40.0 |
| Water | 50.0 |

| | |
|---|---|
| ¹ Gliadin available from MGP Ingredients. ² FiberStar 70 available from MGP Ingredients. | |

This blueberry muffin mix is an example of a chemically-leavened, baked product according to the present invention. The sugar, salt, and shortening were blended together until uniform. The remaining ingredients (except for the eggs and water) were added and mixed until uniform. The eggs were added along with half of the water and the batter was mixed in a mixer on medium speed for 2 minutes. Then, the remaining water was added and the batter mixed on low speed for an additional 2 minutes. The blueberries were gently folded into the batter which was then poured into muffin cups. Baking time and temperature will largely depend upon muffin size, however, generally, a 75 gram muffin will be baked at 204°C (400°F) for 20 minutes.

### Example 17

### Pound Cake

| Ingredients | Weight % (Flour Weight Basis) |
|---|---|
| Granulated sugar | 201.0 |
| Salt | 4.2 |
| Nonfat dry milk | 10.6 |
| Cake flour | 100.0 |
| Vital Wheat Gluten | 7.4 |
| Devitalized Wheat Gluten¹ | 18.1 |
| Resistant Starch² | 74.5 |
| Shortening (Emulsified) | 119.1 |
| Pregel 40 | 7.4 |
| Water | 76.5 |
| Whole eggs | 68.1 |
| Yolks | 51.0 |
| Flavor | 4.2 |
| Baking powder . | 2.2 |

| | |
|---|---|
| ¹ Wheatex™ 16 available from MGP Ingredients. ² FiberStar 70 available from MGP Ingredients. | |

This pound cake is an example of a chemically-leavened, baked product according to the present invention. All ingredients (except for the eggs and water) were blended together until uniform. The water was added and the batter mixed until smooth. The eggs were then added in three stages and mixed until the batter was uniform and fluffy. The cake was baked at 191°C (375°F) for 45-50 minutes.

### Example 18

### Chocolate Cake

| Ingredient | Weight % (Flour Weight Basis) |
|---|---|
| Sugar | 229.6 |
| Salt | 4.5 |
| Nonfat dry milk | 26.7 |
| Cocoa (10/12 natural) | 40.0 |
| Cake flour | 100.0 |
| Vital Wheat Gluten | 4.8 |
| Wheat Protein Isolate¹ | 9.5 |
| Resistant Starch² | 94.6 |
| Pregel 40 | 4.1 |
| Shortening with emulsifier | 89.1 |
| Baking powder | 9.0 |
| Water | 228.6 |
| Flavor | 4.5 |
| Whole eggs | 107.6 |

| | |
|---|---|
| ¹ Arise™ 3000 available from MGP Ingredients. ² FiberStar 70 available from MGP Ingredients. | |

This chocolate cake is an example of a chemically-leavened, baked product according to the present invention. All ingredients (except for the water) were blended together until uniform. Next, 60% of the water was added and the batter mixed on medium speed for 3 minutes. The bowl was scraped, the remaining water was added, and the batter mixed on low speed for 2-3 minutes. The batter was poured into pans and baked at 204°C (400°F) until the center was done.

### Example 19

### Yellow or White Cake

| Ingredient | Weight % (Flour Weight Basis) |
|---|---|
| Sugar | 203.8 |
| Salt | 4.2 |
| Nonfat dry milk | 17.7 |
| Cake flour | 100.0 |
| Vital Wheat Gluten | 11.5 |
| Hydrolyzed Wheat Protein² | 3.8 |
| Resistant Starch³ | 84.6 |
| Pregel 10 | 5.2 |
| Shortening with emulsifier | 85.5 |
| Baking powder | 9.6 |
| Water | 136.7 |
| Flavor | 3.9 |
| Eggs¹ | 102.5 |

| | |
|---|---|
| ¹ For yellow cake use ½ whole eggs and ½ yolks for egg mixture. For white cake use ½ whole eggs and ½ whites for egg mixture. ² HWG 2009 available from MGP Ingredients. ³ FiberStar 70 available from MGP Ingredients. | |

This yellow or white cake is an example of a chemically-leavened, baked product according to the present invention. All ingredients (except for the water and eggs) were blended together until uniform. Sixty percent of the water was added and the batter mixed for 3 minutes on medium speed. The eggs were added and the batter mixed on medium speed for 3 minutes. The remaining water was added and the batter mixed for an additional 2-3 minutes on low speed. The cake was baked at 177°C (350°F) for 20 minutes, or until the center was done.

### Example 20

### Chocolate Chip Cookies

| Ingredient | Weight % (Flour Weight Basis) |
|---|---|
| Pastry flour | 100.0 |
| Vital Wheat Gluten | 6.2 |
| Devitalized Wheat Gluten¹ | 3.1 |
| Resistant Starch² | 90.8 |
| Shortening | 91.9 |
| Butter or margarine | 40.1 |
| Brown sugar | 100.0 |
| Sucrose | 100.0 |
| Soda | 3.1 |
| Salt | 5.6 |
| Whole eggs | 66.0 |
| Pregel 10 | 10.0 |

| | |
|---|---|
| ¹Wheatex™ 16 available from MGP Ingredients. ²FiberStar 70 available from MGP Ingredients. | |

This chocolate chip cookie is an example of a chemically-leavened, baked product according to the present invention. All ingredients (except for the pastry flour) were blended on low speed for approximately 3 minutes. The pastry flour was added and the dough mixed for an additional minute on low speed. Chocolate chips were then added at a desired amount and the dough mixed until the chips were uniformly distributed. The dough was made into balls and baked at 188-193°C (370-380°F) for 10-12 minutes.

### Example 21

### Fried Pie Crust

| Ingredients | Weight % (Flour Weight Basis) |
|---|---|
| Flour, soft | 100.0 |
| Vital Wheat Gluten | 6.3 |
| Fractionated Wheat Protein¹ | 3.6 |
| Resistant Starch² | 90.1 |
| Soy flour | 6.0 |
| High-heat nonfat dry milk | 4.0 |
| Sucrose | 8.0 |
| Dextrose | 4.0 |
| Salt | 5.0 |
| Soda | 0.5 |
| Pregel 10 | 3.0 |
| Shortening | 60.0 |
| Ice water | 70.0 |

| | |
|---|---|
| ¹Glutenin available from MGP Ingredients. ²FiberStar 70 available from MGP Ingredients. | |

The ingredients for fried pie crust were blended together and mixed until uniform. The dough was then formed, filled and deep fried in 177°C (350°F) oil until golden brown (approximately 3-4 minutes).

### Example 22

### Pie Dough

| Ingredient | Weight % (Flour Weight Basis) |
|---|---|
| Pastry flour | 100.0 |
| Vital Wheat Gluten | 7.2 |
| Wheat Protein Concentrate¹ | 2.0 |
| Resistant Starch² | 90.8 |
| Pregel 10 | 4.0 |
| Salt | 6.7 |
| Dextrose | 6.0 |
| All purpose shortening | 120.0 |
| Ice water | 58.0 |

| | |
|---|---|
| ¹ FP 600 available from MGP Ingredients. ² FiberStar 70 available from MGP Ingredients. | |

The dry ingredients for pie dough were blended together until uniform. The shortening was blended in on low speed for 1-1.5 minutes. Then, the cold water was added and the dough mixed for an additional 30 seconds on low speed. Finally, the dough was formed into pie crust.

### Example 23

### Low-fat Crunchy Bar

| Ingredient | Weight % (based on total weight) |
|---|---|
| Corn Syrup | 18.5 |
| Vital Wheat Gluten | 1.0 |
| Devitalized Wheat Gluten¹ | 15.0 |
| Wheat Protein Isolates² | 4.0 |
| Chocolate coating | 15.0 |
| Date paste | 10.0 |
| Granola | 8.7 |
| Crisp rice | 7.0 |
| Honey | 10.0 |
| Chocolate chips | 3.0 |
| Coconut | 1.5 |
| Almonds | 1.5 |
| Brown sugar | 4.7 |
| Nutmeg | 0.1 |

| | |
|---|---|
| ¹ Wheatex™ 120 available from MGP Ingredients. ² Arise™ 6000 available from MGP Ingredients. | |

All ingredients for low-fat crunch bar (except for the chocolate coating) were mixed together until uniform. The mixture was formed into bars, coated with chocolate and packaged.

### Example 24

### Pretzel Dough

| Ingredient | Weight % (Flour Weight Basis) |
|---|---|
| All purpose flour | 100.0 |
| Wheat Protein Isolate¹ | 5.5 |
| Vital wheat gluten | 11.0 |
| Resistant starch² | 5.5 |
| Shortening | 2.5 |
| Instant yeast | 0.22 |
| Salt | 0.9 |
| Malt | 0.5 |
| Water | 60.0 |

| | |
|---|---|
| ¹ Arise™ 6000 available from MGP Ingredients. ² FiberStar 70 available from MGP Ingredients. | |

All dry ingredients were mixed together. The water was added and the dough mixed for one minute in a Hobart mixer (Hobart Corp.) at low speed and 8-10 minutes at medium speed. The dough was proofed for 30 minutes (43.3°C: 110°F and 85% relative humidity) and then the dough formed into the desired shape. The dough was allowed to rest for 5 minutes and was then immersed in 0.25% sodium hydroxide solution at 85-88°C (185-190°F) for 25 seconds. The dough was baked at 246-260°C (475-500°F) for 3 minutes and then at 204-218°C (400-425°F) for 3.5 minutes. The pretzels were placed in a drying oven for 30 minutes at 104-149°C (220-300°F).

### Example 25

### Extruded Breakfast Cereal Mix

| Ingredient | Weight % (based on total weight) |
|---|---|
| Corn flour | 42.0 |
| Wheat flour | 15.0 |
| Vital Wheat Gluten | 1.5 |
| Hydrolyzed Wheat Protein¹ | 0.5 |
| Resistant Starch² | 13.0 |
| Oat flour | 20 |
| Sugar | 6 |
| Salt | 2 |

| | |
|---|---|
| ¹ HWG 2009 available from MGP Ingredients. ² FiberStar 70 available from MGP Ingredients. | |

All dry ingredients were blended together until uniform and processed conventionally in a single- or twin-screw extruder to make a fruit loop-type product. Moisture was added in the conditioner as well as from the steam injected into the barrel.

### Example 26

### High Protein Whole Wheat Bread (Sponge and Dough)

This example describes preparation of a sponge and dough bread according to the present invention. The respective formulations are as follows:

| Ingredient | Weight % (Flour Weight Basis) |
|---|---|
| SPONGE | |
| Whole wheat flour | 70.0 |
| Vital wheat gluten | 15.0 |
| Compressed yeast | 4.0 |
| DOUGH | |
| Whole wheat flour | 30.0 |
| Vital wheat gluten | 50.0 |
| Wheat Protein Isolates¹ | 49.0 |
| Hydrolyzed Wheat Protein² | 1.0 |
| Compressed yeast | 5.1 |
| Salt | 3.0 |
| Water | 190.2 |
| Shortening | 9.0 |
| Sucralose | 0.04 |
| Calcium propionate | 0.25 |
| Diacetyl tartaric acid esters of mono- and diglycerides | 0.50 |

| | |
|---|---|
| ¹ Arise 6000 available from MGP Ingredients. ² HWG 2009 available from MGP Ingredients. | |

The sponge ingredients were first mixed for one minute on low speed, and then mixed for an additional minute on high speed. The sponge was then allowed 3 hours of fermentation time. In preparation of the dough, all of the dough ingredients were added to the sponge and mixed for one minute at low speed followed by one minute of mixing at high speed. The dough was allowed 5 minutes of floor time, and then the dough was scaled to the desired weight. The dough was proofed for 45 minutes at a temperature between 41-43°C (106°-110°F). The dough was baked at 199°C (390°F), with steam, for 36 minutes.

### Example 27

### Yeast-raised Donuts

| Ingredients | Weight % (Flour weight Basis) |
|---|---|
| Flour | 100.0 |
| Vital Wheat Gluten | 7.5 |
| Wheat Protein Isolate¹ | 5.0 |
| Resistant Starch² | 87.5 |
| Sugar | 18.8 |
| Shortening | 25.0 |
| Nonfat dry milk | 6.2 |
| Soy flour | 2.5 |
| Salt | 3.8 |
| Eggs | 2.5 |
| Baking powder | 2.5 |
| Yeast | 10.0 |
| Water | 112.5 |

| | |
|---|---|
| 1 Arise™ available from MGP Ingredients. ² FiberStar 70 available from MGP Ingredients. | |

All dry ingredients were mixed together and the water was added. The dough was mixed for one minute at low speed and 9 ½ minutes at medium speed in a Hobart mixer (Hobart Corp.) equipped with a dough hook. The dough was allowed to rest for one hour at room temperature. The dough was divided into pieces and allowed to rest for 15-20 minutes at room temperature. Dough pieces were rolled out and cut to desired weight with a donut cutter. The dough was proofed at 35-46°C (95-115°F) for 25-35 minutes. The donuts were fried at 191°C (375°F) for 45-60 seconds each side.

### Example 28

### Flour Tortilla

| Ingredients | Weight % (Flour weight Basis) |
|---|---|
| Tortilla Flour | 100.0 |
| Vital Wheat Gluten | 12.0 |
| Resistant Starch¹ | 88.0 |
| Wheat Protein Concentrate² | 6.0 |
| Salt | 3.0 |
| Sodium Bicarbonate | 1.2 |
| Sodium Stearoyl Lactylate | 1.0 |
| Potassium Sorbate | 0.8 |
| Sodium Propionate | 1.0 |
| Sodium Aluminum Sulfate | 1.16 |
| Fumaric Acid | 0.48 |
| Shortening | 12.0 |

| | |
|---|---|
| ¹ FiberStar 70 available from MGP Ingredients. ² FP 600 available from MGP Ingredients. | |

In this Example 28, the dry ingredients were mixed for 2 minutes at low speed in a Hobart mixer (Hobart Corp.) equipped with a paddle. Then, the shortening was added and mixed for another 6 minutes at low speed. Water at 35°C (95°F) was added and mixed using a hook attachment for 1 minute at low speed and 4 minutes at medium speed. The dough was rested for 5 minutes in a proofing cabinet at 33-35°C (92-95°F) and 70% relative humidity. After 5 minutes, dough balls were formed using a divider/rounder. The dough balls were rested again in the proofing cabine 33-35 °C (92-95°F and 70% relative humidity) for 10 minutes. Then, a hot press was used to press the dough balls into disks. The top and bottom platens of the hot press were set at 395°C 743°F with a dwell time of 1.35 seconds and pressure of 68.9 kPa (1100 psi). The disks were baked in a three-tier oven 177-182°C (350-360°F) for 30 seconds. The tortillas were then allowed to cool for 1.5 minutes, and placed inside a low-density polyethylene bag.

## Claims

1. A wheat-containing bakery product comprising:
from about 1-150 baker's percent of a first proteinaceous ingredient comprising at least about 70% by weight protein; and
a second proteinaceous ingredient selected from the group consisting of
(a) between about 0.5-100 baker's percent of a wheat protein isolate product;
(b) between about 0.5-100 baker's percent of a wheat protein concentrate product;
(c) between about 0.5-100 baker's percent of a devitalized wheat gluten product;
(d) between about 0.5-20 baker's percent of a fractionated wheat protein product;
(e) between about 0.5-20 baker's percent of a deamidated wheat gluten product;
(f) between about 0.5-30 baker's percent of a hydrolyzed wheat protein product;
and
(g) any combination of ingredients (a)-(f).

2. The product of claim 1, said product comprising from about 5-60 baker's percent of said first proteinaceous ingredient.

3. The product of claim 1, said product being chemically leavened.

4. The product of claim 3, wherein said first proteinaceous ingredient is vital wheat gluten.

5. The product of claim 3, wherein said wheat protein concentrate product (b) is a wheat protein concentrate manufactured by dispersing wet gluten in an ammonia solution followed by spray drying.

6. The product of claim 3, wherein said second proteinaceous ingredient is (d) between about 0.5-20 baker's percent of a fractionated wheat protein product.

7. The product of claim 3, wherein said second proteinaceous ingredient is (e) between about 0.5-20 baker's percent of a deamidated wheat gluten product.

8. The product of claim 3, said product having a total protein content from about 4-18% by weight.

9. The product of claim 1, said product being yeast leavened.

10. The product of claim 9, wherein said first proteinaceous ingredient is vital wheat gluten.

11. The product of claim 9, wherein said wheat protein concentrate product (b) is a wheat protein concentrate manufactured by dispersing wet gluten in an ammonia solution followed by spray drying.

12. The product of claim 9, wherein said second proteinaceous ingredient is (d) between about 0.5-20 baker's percent of a fractionated wheat protein product.

13. The product of claim 9, wherein said second proteinaceous ingredient is (e) between about 0.5-20 baker's percent of a deamidated wheat gluten product.

14. The product of claim 9, said product having a total protein content from about 5-35% by weight.

15. The product of claim 1, said product further comprising from about 5-120 baker's percent of a resistant starch.

16. The product of claim 15, said resistant starch selected from the group consisting of physically inaccessible starch entrapped within a protein matrix or a plant cell wall, raw starch granules that resist digestion by alpha-amylase, retrograded amylose, and chemically modified starch.

17. The product of claim 16, said resistant starch being a chemically modified starch.

18. The product of claim 15, wherein said first proteinaceous ingredient is vital wheat gluten.

19. The product of claim 15, wherein said wheat protein concentrate product (b) is a wheat protein concentrate manufactured by dispersing wet gluten in an ammonia solution followed by spray drying.

20. The product of claim 15, wherein said second proteinaceous ingredient is (d) between about 0.5-20 baker's percent of a fractionated wheat protein product.

21. The product of claim 15, wherein said second proteinaceous ingredient is (e) between about 0.5-20 baker's percent of a deamidated wheat gluten product.

22. The product of claim 15, said product comprising from about 5-60 baker's percent of said first proteinaceous ingredient, said first ingredient being vital wheat gluten having a protein content of at least about 70% by weight.

23. The product of claim 15, said product being chemically leavened.

24. The product of claim 23, said product having a total protein content from about 4-18% by weight.

25. The product of claim 15, said product being yeast leavened.

26. The product of claim 25, said product having a total protein content from about 5-35% by weight.

27. A dough comprising:
a quantity of flour;
from about 1-150 baker's percent of a first proteinaceous ingredient comprising at least about 70% by weight protein: and
a second proteinaceous ingredient selected from the group consisting of
(a) between about 0.5-100 baker's percent of a wheat protein isolate product;
(b) between about 0.5-100 baker's percent of a wheat protein concentrate product;
(c) between about 0.5-100 baker's percent of a devitalized wheat gluten product;
(d) between about 0.5-20 baker's percent of a fractionated wheat protein product;
(e) between about 0.5-20 baker's percent of a deamidated wheat gluten product;
(f) between about 0.5-30 baker's percent of a hydrolyzed wheat protein product;
and
(g) any combination of ingredients (a)-(f).

28. The dough of claim 27, said dough comprising from about 5-60 baker's percent of said first proteinaceous ingredient.

29. The dough of claim 27, said dough being chemically leavened.

30. The dough of claim 29, wherein said first proteinaceous ingredient is vital wheat gluten.

31. The dough of claim 29, wherein said wheat protein concentrate product (b) is a wheat protein concentrate manufactured by dispersing wet gluten in an ammonia solution followed by spray drying.

32. The dough of claim 29, wherein said second proteinaceous ingredient is (d) between about 0.5-20 baker's percent of a fractionated wheat protein product.

33. The dough of claim 29, wherein said second proteinaceous ingredient is (e) between about 0.5-20 baker's percent of a deamidated wheat gluten product.

34. The dough of claim 29, said dough having a total protein content from about 4-18% by weight.

35. The dough of claim 27, said dough being yeast leavened.

36. The dough of claim 35, wherein said first proteinaceous ingredient is vital wheat gluten.

37. The dough of claim 35, wherein said wheat protein concentrate product (b) is a wheat protein concentrate manufactured by dispersing wet gluten in an ammonia solution followed by spray drying.

38. The dough of claim 35, wherein said second proteinaceous ingredient is (d) between about 0.5-20 baker's percent of a fractionated wheat protein product.

39. The dough of claim 35, wherein said second proteinaceous ingredient is (e) between about 0.5-20 baker's percent of a deamidated wheat gluten product.

40. The dough of claim 35, said dough having a total protein content from about 5-35% by weight.

41. The dough of claim 27, said product comprising from about 5-120 baker's percent of a resistant starch.

42. The dough of claim 41, said resistant starch selected from the group consisting of physically inaccessible starch entrapped within a protein matrix or a plant cell wall, raw starch granules that resist digestion by alpha-amylase, retrograded amylose, and chemically modified starch.

43. The dough of claim 42, said resistant starch being a chemically modified starch.

44. The dough of claim 41, wherein said first proteinaceous ingredient is vital wheat gluten.

45. The dough of claim 41, wherein said wheat protein concentrate product (b) is a wheat protein concentrate manufactured by dispersing wet gluten in an ammonia solution followed by spray drying.

46. The dough of claim 41, wherein said second proteinaceous ingredient is (d) between about 0.5-20 baker's percent of a fractionated wheat protein product.

47. The dough of claim 41, wherein said second proteinaceous ingredient is (e) between about 0.5-20 baker's percent of a deamidated wheat gluten product.

48. The dough of claim 41, said dough comprising from about 5-60 baker's percent of said first proteinaceous ingredient, said first ingredient being vital wheat gluten having a protein content of at least about 70% by weight.

49. The dough of claim 41, said dough being chemically leavened.

50. The dough of claim 49, said dough having a total protein content from about 4-18% by weight.

51. The dough of claim 41, said dough being yeast leavened.

52. The dough of claim 51, said dough having a total protein content from about 5-35% by weight.

## Patentansprüche

1. Weizenhaltiges Backwarenprodukt, das umfasst:
etwa 1 bis 150 Bäckerprozent eines ersten proteinhaltigen Bestandteils, der mindestens etwa 70 Gew.-% Protein umfasst, und
einen zweiten proteinhaltigen Bestandteil ausgewählt aus der Gruppe bestehend aus
(a) etwa 0,5 bis 100 Bäckerprozent Weizenproteinisolatprodukt,
(b) etwa 0,5 bis 100 Bäckerprozent Weizenproteinkonzentratprodukt,
(c) etwa 0,5 bis 100 Bäckerprozent devitalisiertes Weizenglutenprodukt,
(d) etwa 0,5 bis 20 Bäckerprozent fraktioniertes Weizenproteinprodukt,
(e) etwa 0,5 bis 20 Bäckerprozent deamidiertes Weizenglutenprodukt,
(f) etwa 0,5 bis 30 Bäckerprozent hydrolysiertes Weizenproteinprodukt, und
(g) irgendeine Kombination der Bestandteile (a) bis (f).

2. Produkt nach Anspruch 1, bei dem das Produkt etwa 5 bis 60 Bäckerprozent des ersten proteinhaltigen Bestandteils umfasst.

3. Produkt nach Anspruch 1, bei dem das Produkt chemisch zum Aufgehen gebracht worden ist.

4. Verfahren nach Anspruch 3, bei dem der erste proteinhaltige Bestandteil vitales Weizengluten ist.

5. Produkt nach Anspruch 3, bei dem das Weizenproteinkonzentratprodukt (b) ein Weizenproteinkonzentrat ist, das durch Dispergierung von nassem Gluten einer Ammoniaklösung gefolgt von Sprühtrocknung hergestellt worden ist.

6. Produkt nach Anspruch 3, bei dem der zweite proteinhaltige Bestandteil (d) etwa 0,5 bis 20 Bäckerprozent fraktioniertes Weizenproteinprodukt ist.

7. Produkt nach Anspruch 3, bei dem der zweite proteinhaltige Bestandteil (e) etwa 0,5 bis 20 Bäckerprozent deamidiertes Weizenglutenprodukt ist.

8. Produkt nach Anspruch 3, bei dem das Produkt einen Gesamtproteingehalt von etwa 4 bis 18 Gew.-% aufweist.

9. Produkt nach Anspruch 1, bei dem das Produkt durch Hefe zum Aufgehen gebracht worden ist.

10. Produkt nach Anspruch 9, bei dem der erste proteinhaltige Bestandteil vitales Weizengluten ist.

11. Produkt nach Anspruch 9, bei dem das Weizenproteinkonzentratprodukt (b) ein Weizenproteinkonzentrat ist, das durch Dispergierung von nassem Gluten in einer Ammoniaklösung gefolgt von Sprühtrocknung hergestellt worden ist.

12. Produkt nach Anspruch 9, bei dem der zweite proteinhaltige Bestandteil (d) etwa 0,5 bis 20 Bäckerprozent fraktioniertes Weizenproteinprodukt ist.

13. Produkt nach Anspruch 9, bei dem der zweite proteinhaltige Bestandteil (e) etwa 0,5 bis 20 Bäckerprozent deamidiertes Weizenglutenprodukt ist.

14. Produkt nach Anspruch 9, bei dem das Produkt einen Gesamtproteingehalt von etwa 5 bis 35 Gew.-% aufweist.

15. Produkt nach Anspruch 1, bei dem das Produkt ferner etwa 5 bis 120 Bäckerprozent einer beständigen Stärke umfasst.

16. Produkt nach Anspruch 15, bei dem die beständige Stärke ausgewählt ist aus der Gruppe bestehend aus physikalisch nicht-zugänglicher Stärke eingeschlossen in einer Proteinmatrix oder einer Pflanzenzellwand, Rohstärkekörnern, die einem Aufschluss durch α-Amylase widerstehen, retrogradierter Amylose und chemisch modifizierter Stärke.

17. Produkt nach Anspruch 16, bei dem die beständige Stärke chemisch modifizierte Stärke ist.

18. Produkt nach Anspruch 15, bei dem der erste proteinhaltige Bestandteil vitales Weizengluten ist.

19. Produkt nach Anspruch 15, bei dem das Weizenproteinkonzentratprodukt (b) ein Weizenproteinkonzentrat ist, das durch Dispergierung von nassem Gluten in einer Ammoniaklösung gefolgt von Sprühtrocknung hergestellt worden ist.

20. Produkt nach Anspruch 15, bei dem der zweite proteinhaltige Bestandteil (d) etwa 0,5 bis 20 Bäckerprozent fraktioniertes Weizenproteinprodukt ist.

21. Produkt nach Anspruch 15, bei dem der zweite proteinhaltige Bestandteil (e) etwa 0,5 bis 20 Bäckerprozent deamidiertes Weizenglutenprodukt ist.

22. Produkt nach Anspruch 15, bei dem das Produkt etwa 5 bis 60 Bäckerprozent des ersten proteinhaltigen Bestandteils umfasst, wobei der erste Bestandteil vitales Weizengluten mit einem Proteingehalt von mindestens etwa 70 Gew.-% ist.

23. Produkt nach Anspruch 15, bei dem das Produkt chemisch zum Aufgehen gebracht worden ist.

24. Produkt nach Anspruch 23, bei dem das Produkt einen Gesamtproteingehalt von etwa 4 bis 18 Gew.-% aufweist.

25. Produkt nach Anspruch 15, bei dem das Produkt durch Hefe zum Aufgehen gebracht worden ist.

26. Produkt nach Anspruch 25, bei dem das Produkt einen Gesamtproteingehalt von etwa 5 bis 35 Gew.-% aufweist.

27. Teig, der umfasst:
eine Menge an Mehl,
etwa 1 bis 150 Bäckerprozent eines ersten proteinhaltigen Bestandteils, der mindestens etwa 70 Gew.-% Protein umfasst, und
einen zweiten proteinhaltigen Bestandteil ausgewählt aus der Gruppe bestehend aus
(a) etwa 0,5 bis 100 Bäckerprozent Weizenproteinisolatprodukt,
(b) etwa 0,5 bis 100 Bäckerprozent Weizenproteinkonzentratprodukt,
(c) etwa 0,5 bis 100 Bäckerprozent devitalisiertes Weizenglutenprodukt,
(d) etwa 0,5 bis 20 Bäckerprozent fraktioniertes Weizenproteinprodukt,
(e) etwa 0,5 bis 20 Bäckerprozent deamidiertes Weizenglutenprodukt,
(f) etwa 0,5 bis 30 Bäckerprozent hydrolisiertes Weizenproteinprodukt, und
(g) irgendeine Kombination der Bestandteile (a) bis (f).

28. Teig nach Anspruch 27, bei dem der Teig etwa 5 bis 60 Bäckerprozent des ersten proteinhaltigen Bestandteils umfasst.

29. Teig nach Anspruch 27, bei dem der Teig chemisch zum Aufgehen gebracht worden ist.

30. Teig nach Anspruch 29, bei dem der erste proteinhaltige Bestandteil vitales Weizengluten ist.

31. Teig nach Anspruch 29, bei dem das Weizenproteinkonzentratprodukt (b) ein Weizenproteinkonzentrat ist, das durch Dispergierung von nassem Gluten in einer Ammoniaklösung gefolgt von Sprühtrocknung hergestellt worden ist.

32. Teig nach Anspruch 29, bei dem der zweite proteinhaltige Bestandteil (d) etwa 0,5 bis 20 Bäckerprozent fraktioniertes Weizenproteinprodukt ist.

33. Teig nach Anspruch 29, bei dem der zweite proteinhaltige Bestandteil (e) etwa 0,5 bis 20 Bäckerprozent deamidiertes Weizenglutenprodukt ist.

34. Teig nach Anspruch 29, bei dem der Teig einen Gesamtproteingehalt von etwa 4 bis 18 Gew.-% aufweist.

35. Teig nach Anspruch 27, bei dem der Teig durch Hefe zum Aufgehen gebracht worden ist.

36. Teig nach Anspruch 35, bei dem der erste proteinhaltige Bestandteil vitales Weizengluten ist.

37. Teig nach Anspruch 35, bei dem das Weizenproteinkonzentratprodukt (b) ein Weizenproteinkonzentrat ist, das durch Dispergierung von nassem Gluten in einer Ammoniaklösung gefolgt von Sprühtrocknung hergestellt worden ist.

38. Teig nach Anspruch 35, bei dem der zweite proteinhaltige Bestandteil (d) etwa 0,5 bis 20 Bäckerprozent fraktioniertes Weizenproteinprodukt ist.

39. Teig nach Anspruch 35, bei dem der zweite proteinhaltige Bestandteil (e) etwa 0,5 bis 20 Bäckerprozent deamidiertes Weizenglutenprodukt ist.

40. Teig nach Anspruch 35, bei dem der Teig einen Gesamtproteingehalt von etwa 5 bis 35 Gew.-% aufweist.

41. Teig nach Anspruch 27, bei dem das Produkt etwa 5 bis 120 Bäckerprozent beständige Stärke umfasst.

42. Teig nach Anspruch 41, bei dem die beständige Stärke ausgewählt ist aus der Gruppe bestehend aus physikalisch unzulänglicher Stärke eingeschlossen in eine Proteinmatrix oder eine Pflanzenzellwand, Rohstärkekörnern, die einem Aufschluss durch α-Amylase widerstehen, retrogradierter Amylose und chemisch modifizierter Stärke.

43. Teig nach Anspruch 42, bei dem die widerstandsfähige Stärke chemisch modifizierte Stärke ist.

44. Teig nach Anspruch 41, bei dem der erste proteinhaltige Bestandteil vitales Weizengluten ist.

45. Teig nach Anspruch 41, bei dem das Weizenproteinkonzentratprodukt (b) ein Weizenproteinkonzentrat ist, das durch Dispergierung von nassem Gluten in einer Ammoniaklösung gefolgt von Sprühtrocknung hergestellt worden ist.

46. Teig nach Anspruch 41, bei dem der zweite proteinhaltige Bestandteil (d) etwa 0,5 bis 20 Bäckerprozent fraktioniertes Weizenproteinprodukt ist.

47. Teig nach Anspruch 41, bei dem der zweite proteinhaltige Bestandteil (e) etwa 0,5 bis 20 Bäckerprozent deamidiertes Weizenglutenprodukt ist.

48. Teig nach Anspruch 41, bei dem der Teig etwa 5 bis 60 Bäckerprozent des ersten proteinhaltigen Bestandteils umfasst, wobei dieser erste Bestandteil vitales Weizengluten mit einem Proteingehalt von mindestens etwa 70 Gew.-% ist.

49. Teig nach Anspruch 41, bei dem der Teig chemisch zum Aufgehen gebracht worden ist.

50. Teig nach Anspruch 49, bei dem der Teig einen Gesamtproteingehalt von etwa 4 bis 18 Gew.-% aufweist.

51. Teig nach Anspruch 41, bei dem der Teig durch Hefe zum Aufgehen gebracht worden ist.

52. Teig nach Anspruch 51, bei dem der Teig einen Gesamtproteingehalt von etwa 5 bis 35 Gew.-% aufweist.

## Revendications

1. Produit de boulangerie contenant du blé comprenant :
d'environ 1 à environ 150 pour cent (pourcentage du boulanger) d'un premier ingrédient protéique comprenant au moins environ 70 % en poids de protéine ; et
un second ingrédient protéique choisi dans le groupe constitué
(a) d'environ 0,5 à environ 100 pour cent (pourcentage du boulanger) d'un isolat de protéine de blé ;
(b) d'environ 0,5 à environ 100 pour cent (pourcentage du boulanger) d'un concentré de protéine de blé ;
(c) d'environ 0,5 à environ 100 pour cent (pourcentage du boulanger) d'un gluten de blé dévitalisé ;
(d) d'environ 0,5 à environ 20 pour cent (pourcentage du boulanger) d'une protéine de blé fractionnée ;
(e) d'environ 0,5 à environ 20 pour cent (pourcentage du boulanger) d'un gluten de blé désamidé ;
(f) d'environ 0,5 à environ 30 pour cent (pourcentage du boulanger) d'une protéine de blé hydrolysée ; et
(g) toute combinaison des ingrédients (a) à (f).

2. Produit selon la revendication 1, ledit produit comprenant d'environ 5 à environ 60 pour cent (pourcentage du boulanger) dudit premier ingrédient protéique.

3. Produit selon la revendication 1, ledit produit étant levé à l'aide de produits chimiques.

4. Produit selon la revendication 3 dans lequel ledit premier ingrédient protéique est un gluten de blé vital.

5. Produit selon la revendication 3, dans lequel ledit concentré de protéine de blé (b) est un concentré de protéine de blé fabriqué en dispersant du gluten humide dans une solution d'ammoniac puis en effectuant un séchage par atomisation.

6. Produit selon la revendication 3, dans lequel ledit second ingrédient protéique est (d) d'environ 0,5 à environ 20 pour cent (pourcentage du boulanger) d'une protéine de blé fractionnée.

7. Produit selon la revendication 3, dans lequel ledit second ingrédient protéique est (e) d'environ 0,5 à environ 20 pour cent (pourcentage du boulanger) d'un gluten de blé désamidé.

8. Produit selon la revendication 3, ledit produit ayant une teneur totale en protéine d'environ 4 à environ 18 % en poids.

9. Produit selon la revendication 1, ledit produit étant levé à l'aide de levure.

10. Produit selon la revendication 9, dans lequel ledit premier ingrédient protéique est un gluten de blé vital.

11. Produit selon la revendication 9, dans lequel ledit concentré de protéine de blé (b) est un concentré de protéine de blé fabriqué en dispersant du gluten humide dans une solution d'ammoniac puis en effectuant un séchage par atomisation.

12. Produit selon la revendication 9, dans lequel ledit second ingrédient protéique est (d) d'environ 0,5 à environ 20 pour cent (pourcentage du boulanger) d'une protéine de blé fractionnée.

13. Produit selon la revendication 9, dans lequel ledit second ingrédient protéique est (e) d'environ 0,5 à environ 20 pour cent (pourcentage du boulanger) d'un gluten de blé désamidé.

14. Produit selon la revendication 9, ledit produit ayant une teneur totale en protéine d'environ 5 à environ 35 % en poids.

15. Produit selon la revendication 1, ledit produit comprenant en outre d'environ 5 à environ 120 pour cent (pourcentage du boulanger) d'un amidon résistant.

16. Produit selon la revendication 15, ledit amidon résistant étant choisi dans le groupe constitué d'amidon physiquement inaccessible piégé à l'intérieur d'une matrice protéique ou de la paroi cellulaire d'une plante, de granules d'amidon brut qui résistent à la digestion par l'alpha-amylase, d'amylose rétrogradée et d'amidon chimiquement modifié.

17. Produit selon la revendication 16, ledit amidon résistant étant un amidon chimiquement modifié.

18. Produit selon la revendication 15, dans lequel ledit premier ingrédient protéique est un gluten de blé vital.

19. Produit selon la revendication 15, dans lequel ledit concentré de protéine de blé (b) est un concentré de protéine de blé fabriqué en dispersant du gluten humide dans une solution d'ammoniac puis en effectuant un séchage par atomisation.

20. Produit selon la revendication 15, dans lequel ledit second ingrédient protéique est (d) d'environ 0,5 à environ 20 pour cent (pourcentage du boulanger) d'une protéine de blé fractionnée.

21. Produit selon la revendication 15, dans lequel ledit second ingrédient protéique est (e) d'environ 0,5 à environ 20 pour cent (pourcentage du boulanger) d'un gluten de blé désamidé.

22. Produit selon la revendication 15, ledit produit comprenant d'environ 5 à environ 60 pour cent (pourcentage du boulanger) dudit premier ingrédient protéique, ledit premier ingrédient étant du gluten de blé vital ayant une teneur en protéine d'au moins environ 70 % en poids.

23. Produit selon la revendication 15, ledit produit étant levé à l'aide de produits chimiques.

24. Produit selon la revendication 23, ledit produit ayant une teneur totale en protéine d'environ 4 à environ 18 % en poids.

25. Produit selon la revendication 15, ledit produit étant levé à l'aide de levure.

26. Produit selon la revendication 25, ledit produit ayant une teneur totale en protéine d'environ 5 à environ 35 % en poids.

27. Pâte comprenant :
une certaine quantité de farine ;
d'environ 1 à environ 150 pour cent (pourcentage du boulanger) d'un premier ingrédient protéique comprenant au moins environ 70 % en poids de protéine : et
un second ingrédient protéique choisi dans le groupe constitué
(a) d'environ 0,5 à environ 100 pour cent (pourcentage du boulanger) d'un isolat de protéine de blé ;
(b) d'environ 0,5 à environ 100 pour cent (pourcentage du boulanger) d'un concentré de protéine de blé ;
(c) d'environ 0,5 à environ 100 pour cent (pourcentage du boulanger) d'un gluten de blé dévitalisé ;
(d) d'environ 0,5 à environ 20 pour cent (pourcentage du boulanger) d'une protéine de blé fractionnée ;
(e) d'environ 0,5 à environ 20 pour cent (pourcentage du boulanger) d'un gluten de blé désamidé ;
(f) d'environ 0,5 à environ 30 pour cent (pourcentage du boulanger) d'une protéine de blé hydrolysée ; et
(g) toute combinaison des ingrédients (a) à (f)

28. Pâte selon la revendication 27, ladite pâte comprenant d'environ 5 à environ 60 pour cent (pourcentage du boulanger) dudit premier ingrédient protéique.

29. Pâte selon la revendication 27, ladite pâte étant levée à l'aide de produits chimiques.

30. Pâte selon la revendication 29, dans laquelle ledit premier ingrédient protéique est un gluten de blé vital.

31. Pâte selon la revendication 29, dans laquelle ledit concentré de protéine de blé (b) est un concentré de protéine de blé fabriqué en dispersant du gluten humide dans une solution d'ammoniac puis en effectuant un séchage par atomisation.

32. Pâte selon la revendication 29, dans laquelle ledit second ingrédient protéique est (d) d'environ 0,5 à environ 20 pour cent (pourcentage du boulanger) d'une protéine de blé fractionnée.

33. Pâte selon la revendication 29, dans laquelle ledit second ingrédient protéique est (e) d'environ 0,5 à environ 20 pour cent (pourcentage du boulanger) d'un gluten de blé désamidé.

34. Pâte selon la revendication 29, ladite pâte ayant une teneur totale en protéine d'environ 4 à environ 18 % en poids.

35. Pâte selon la revendication 27, ladite pâte étant levée à l'aide de levure.

36. Pâte selon la revendication 35, dans laquelle ledit premier ingrédient protéique est un gluten de blé vital.

37. Pâte selon la revendication 35, dans laquelle ledit concentré de protéine de blé (b) est un concentré de protéine de blé fabriqué en dispersant du gluten humide dans une solution d'ammoniac puis en effectuant un séchage par atomisation.

38. Pâte selon la revendication 35, dans laquelle ledit second ingrédient protéique est (d) d'environ 0,5 à environ 20 pour cent (pourcentage du boulanger) d'une protéine de blé fractionnée.

39. Pâte selon la revendication 35, dans laquelle ledit second ingrédient protéique est (e) d'environ 0,5 à environ 20 pour cent (pourcentage du boulanger) d'un gluten de blé désamidé.

40. Pâte selon la revendication 35, ladite pâte ayant une teneur totale en protéine d'environ 5 à environ 35 % en poids.

41. Pâte selon la revendication 27, ledit produit comprenant d'environ 5 à environ 120 pour cent (pourcentage du boulanger) d'un amidon résistant.

42. Pâte selon la revendication 41, ledit amidon résistant étant choisi dans le groupe constitué d'amidon physiquement inaccessible piégé à l'intérieur d'une matrice protéique ou de la paroi cellulaire d'une plante, de granules d'amidon brut qui résistent à la digestion par l'alpha-amylase, d'amylose rétrogradée et d'amidon chimiquement modifié.

43. Pâte selon la revendication 42, ledit amidon résistant étant un amidon chimiquement modifié.

44. Pâte selon la revendication 41, dans laquelle ledit premier ingrédient protéique est un gluten de blé vital.

45. Pâte selon la revendication 41, dans laquelle ledit concentré de protéine de blé (b) est un concentré de protéine de blé fabriqué en dispersant du gluten humide dans une solution d'ammoniac puis en effectuant un séchage par atomisation.

46. Pâte selon la revendication 41, dans laquelle ledit second ingrédient protéique est (d) d'environ 0,5 à environ 20 pour cent (pourcentage du boulanger) d'une protéine de blé fractionnée.

47. Pâte selon la revendication 41, dans laquelle ledit second ingrédient protéique est (e) d'environ 0,5 à environ 20 pour cent (pourcentage du boulanger) d'un gluten de blé désamidé.

48. Pâte selon la revendication 41, ladite pâte comprenant d'environ 5 à environ 60 pour cent (pourcentage du boulanger) dudit premier ingrédient protéique, ledit premier ingrédient étant du gluten de blé vital ayant une teneur en protéine d'au moins environ 70 % en poids.

49. Pâte selon la revendication 41, ladite pâte étant levée à l'aide de produits chimiques.

50. Pâte selon la revendication 49, ladite pâte ayant une teneur totale en protéine d'environ 4 à environ 18 % en poids.

51. Pâte selon la revendication 41, ladite pâte étant levée à l'aide de levure.

52. Pâte selon la revendication 51, ladite pâte ayant une teneur totale en protéine d'environ 5 à environ 35 % en poids.
